**Europäisches Patentamt**

**European Patent Office**

**Office européen des brevets**

(19)

(11) Veröffentlichungsnummer: **0 076 971
B1**

# EUROPÄISCHE PATENTSCHRIFT

(12)

(45) Veröffentlichungstag der Patentschrift:
13.11.85

(21) Anmeldenummer: 82108992.7

(22) Anmeldetag: **29.09.82**

(51) Int. Cl.⁴: **C 08 K 3/22,** C 08 L 33/20,
D 01 F 1/10, D 01 F 6/40,
D 01 F 6/54

(54) Verfahren zur Herstellung schwer entflammbarer Formkörper aus Polymeren.

(30) Priorität: 10.10.81 DE 3140274

(43) Veröffentlichungstag der Anmeldung:
20.04.83 Patentblatt 83/16

(45) Bekanntmachung des Hinweises auf die Patenterteilung:
13.11.85 Patentblatt 85/46

(84) Benannte Vertragsstaaten:
DE FR GB IT

(56) Entgegenhaltungen:
GB - A - 1 373 774
US - A - 3 748 302

(73) Patentinhaber: **BAYER AG, Konzernverwaltung RP
Patentabteilung, D-5090 Leverkusen 1 Bayerwerk (DE)**

(72) Erfinder: **Reinehr, Ulrich, Dr., Röntgenstrasse 29,
D-4047 Dormagen (DE)**
Erfinder: **Herbertz, Toni, Hauptstrasse 79,
D-4047 Dormagen 3 (DE)**
Erfinder: **Spilgies, Günter, Dr., Wachtelweg 2,
D-4047 Dormagen (DE)**

**Beschreibung**

Die Erfindung betrifft ein Verfahren zur Herstellung schwer entflammbarer, selbstverlöschender Formkörper aus Polymeren, insbesondere ein Verfahren zur Herstellung schwerentflammbarer, selbstverlöschender Polyacrylnitrilfäden.

Die Erzeugung von Polyacrylnitrilfäden, die sich schwer entzünden und verbrennen lassen, gewinnt zunehmend an Bedeutung. Aus den Fäden hergestellte schwer entflammbare Fasern werden vor allem für Schlafbekleidung, Teppiche, Vorhänge, Autoauskleidungen und Decken verlangt. Acrylnitrilcopolymere, die Vinylidenchloridpolymer-Einheiten enthalten, haben gegenüber Acrylnitrilhomo- und -copolymerisaten, die keine Vinylidenchlorid-Einheit enthalten, eine verbesserte Flammbeständigkeit. Eine weitere Steigerung der Flammbeständigkeit läßt sich durch die Gegenwart von Antimonoxid erreichen, dessen flammhemmende Wirkung auf einem synergistischen Effekt mit Halogenverbindungen beruht.

Die Zugabe von Antimonoxid führt jedoch im Zuge der Faserherstellung zu Schwierigkeiten infolge der hohen Teilchengröße des Antimonoxids von 2 bis 7 µm. Wird beispielsweise eine 35gew.-%ige Spinnlösung eines Acrylnitrilcopolymerisates aus 59 Gew.-% Acrylnitril, 37,5 Gew.-% Vinylidenchlorid und 3,5 Gew.-% Natriummethallylsulfonat in Dimethylformamid unter Zusatz von 2 Gew.-% Antimontrioxid, bezogen auf Polymerfeststoff, aus einer 240 Lochdüse trocken versponnen, so treten zahlreiche Spinnstörungen auf und die Fäden reißen im Spinnschacht ab. Es kommt zu Antimonablagerungen in der Spinnvorrichtung, namentlich in den Spinnzuleitungen, Pumpen, Packungssieben und vor allem in der Spinndüse. Es hat nicht an Versuchen gefehlt, diese Schwierigkeiten auszuschalten. In der GB-PS 1 373 774 wird z. B. die Herstellung von Antimonoxid-Solen mit Teilchen von einer maximalen Ausdehnung von 50 nm zur Herstellung flammbeständiger Zusätze, die keine Spinnstörungen und Mattierungseffekte verursachen, beschrieben. Ein anderes Verfahren (DE-OS 2 509 896) schlägt den Zusatz von mindestens 0,1 Gew.-Teilen Zink vor, um die Abscheidung von metallischem Antimon zu verhindern. In der DE-OS 3 008 753 wird die Herstellung einer Suspension aus Antimonoxid, Wasser und einem organischen Lösungsmittel und deren Vermischung mit der viskosen Spinnlösung als Verfahren zur Herstellung von Modacrylfasern hoher Flammbeständigkeit und hohen Glanzes beschrieben. Eine weitere Methode zur Herstellung von Antimontrioxid kleiner Teilchengröße bis max. 10 nm besteht nach DE-OS 29 13 276 darin, Antimontrioxid mit einem Sulfonamid zu verrühren und die homogenisierte Masse in einer 50%igen wäßrigen Dimethylformamidlösung auszufällen. Weitere Verfahren zur Herstellung von feinstverteiltem Antimonoxid empfehlen Kombinationen aus Antimonoxid und Alkali- oder Erdalkali-Antimonaten (DE-OS 2 054 304) oder das Aufheizen von Antimonoxid auf 400 bis 570° C (US-PS 3 333 970). Außerdem werden wasserunlösliche Antimonkomplexverbindungen aus Antimontrichlorid, α-Hydroxycarbonsäure und Monoisocyanaten nach DE-OS 2 422 171 empfohlen. Die DE-OS 2 422 172 regt an, das Umsetzungsprodukt von Antimontrichlorid mit Carbonsäureestern zu den entsprechenden Antimonestern als Flammfestzusatz einzusetzen.

Allen vorstehend zitierten Verfahren ist gemeinsam, daß sie das herkömmliche Antimonoxid auf irgendeine Weise in Antimonoxid kleinerer Teilchengröße zu überführen versuchen. Eine wirklich befriedigende Lösung bezüglich der Störanfälligkeit des Spinnverfahrens wird jedoch nicht erreicht.

Ziel der vorliegenden Erfindung war es, ein Verfahren zur Herstellung schwer entflammbarer Antimonoxid enthaltender, halogenhaltiger Formkörper aus Polymeren, insbesondere schwer entflammbarer Fäden aus Acrylnitrilpolymeren mit einem Gehalt von mindestens 40 Gew.-% an Acrylnitrilpolymer-Einheiten und mindestens 15 Gew.-% an Vinylidenchlorid-Einheiten, zur Verfügung zu stellen, das Störungen bei der Formkörperherstellung, insbesondere Spinnstörungen, und Ablagerungen in den Formkörperherstellungsvorrichtungen, insbesondere in den Spinnvorrichtungen, weitgehend vermeidet und das ohne vielfältige Manipulationen und Stoffumwandlungen physikalischer oder chemischer Art des Antimonoxids auskommt.

Es wurde nun überraschenderweise gefunden, daß man Antimonoxid in homogener Verteilung mit einer Teilchengröße kleiner als 50 nm, vorzugsweise kleiner als 20 nm, in Polymerfestkörper, insbesondere halogenhaltige Polyacrylnitrilfäden, einlagern kann, wenn man der Lösung eines Polymer in einem organischen Lösungsmittel ein Antimonhalogenid, vorzugsweise Antimontrichlorid zusetzt, aus der Polymerlösung Polymerformkörper erzeugt und in diesen vor oder während der Nachbehandlung das Antimonhalogenid zu Antimonoxid umsetzt. Insbesondere wird das Antimonhalogenid Spinnlösungen aus einem halogenhaltigen Acrylnitrilpolymeren und einem organischen Lösungsmittel zugesetzt, diese Spinnlösung versponnen und die ersponnenen Fäden vor oder während der Nachbehandlung mit Wasser in Berührung gebracht. Bei der Benetzung derartiger Fäden erfolgt augenblickliche Hydrolyse unter Abscheidung von feinstem über den ganzen Fadenquerschnitt gleichmäßig verteiltem Antimonoxid. Beim Spinnprozeß treten keinerlei Spinnstörungen auf. Man kann das Antimonhalogenid direkt zur Spinnlösung aus Acrylnitrilpolymeren und dem Spinnlösungsmittel zusetzen oder in einem Teil des Spinnlösungsmittels, beispielsweise Dimethylformamid, auflösen und der eigentlichen Spinnlösung zudosieren.

Zweckmäßig setzt man eine Menge von 1 bis 10 Gew.-%, vorzugsweise 2 bis 5 Gew.-%, bezogen auf Polymerfeststoff, der Polymerfeststofflösung zu.

Neben Dimethylformamid eignen sich als Spinnlösungsmittel Dimethylacetamid, Dimethylsulfoxid

# 0 076 971

und Ethylencarbonat.

Als Antimonchloride kommen solche des drei- und des fünfwertigen Antimons in Frage, auch Mischungen können verwendet werden, wobei Antimontri- und -pentoxid oder Mischungen dieser Oxide entstehen.

Vorzugsweise verwendet man Halogenide des dreiwertigen Antimons, die zu Antimontrioxid hydrolysierbar sind.

In weiterer Ausgestaltung der Erfindung läßt sich die durch die Hydrolyse des Antimonhalogenids zu Antimontrioxid entstehende Salzsäure unmittelbar nach der Wasserbenetzung, beispielsweise am Ende des Spinnschachtes, durch Zusätze alkalisch wirkender Substanzen, wie Ammoniak, Aminen oder Laugen neutralisieren und aus dem Produktions- und Spinnlösungsmittel-Rückgewinnungsprozeß entfernen. Das vorstehend für die Herstellung von schwer brennbaren Polyacrylnitrilfäden beschriebene Verfahren läßt sich auf alle synthetischen Polymeren, die aus einer Spinnlösung nach einem Trocken- oder Naßspinnprozeß versponnen werden, auf die gleiche Weise anwenden. Ebenso lassen sich schwer entflammbare, geformte Gebilde und Artikel, wie Filme, Folien und dergleichen, nach dem erfindungsgemäßen Verfahren herstellen.

Durch das erfindungsgemäße Verfahren wird eine optimale Homogenisierung und Verteilung des Flammschutzmittels im Spinngut über den Fadenquerschnitt erzielt. Anhand von elektronenmikroskopischen Abbildung liegt der Teilchendurchmesser von Antimontrioxid unterhalb 50 nm, vorzugsweise zwischen 10 und 20 nm. Zur Herstellung elektronenmikroskopischer Präparate wurden die Fasern in Dimethylformamid aufgelöst, aus der 0,5%igen Lösung wurden dünne Filme gezogen, die im Elektronenmikroskop durchstrahlbar sind. Wegen der geringen Partikelgröße sind lichtmikroskopisch nur einige der Teilchen zu sehen.

Als Prüfmethode für die Entflammbarkeit und das Brennverhalten von textilen Flächengebilden wurde die Messung nach dem Limiting Oxygen Index (LOI) durchgeführt. Hierbei wird das Volumenverhältnis von Sauerstoff zur Summe aus Sauerstoff und Stickstoff in jenem Gemisch bestimmt, bei dem das Textil nach der Entzündung gerade noch von oben nach unten weiter brennt. Es gilt:

$$LOI = \frac{O_2(Vol.-\%)}{O_2(Vol.-\%) + N_2(Vol.-\%)} \times 100$$

Da Probenanordnung und Flächengewicht die Ergebnisse beeinflussen, wurden nur Vliese von ca. 200 g/m² Flächengewicht getestet, die in eine Probenhalterung geklemmt wurden. Der LOI-Wert gibt demnach die zur Verbrennung notwendige Sauerstoffkonzentration an. Je höher diese Konzentration ist, um so schwerer entflammbar sind die Fäden.

## Beispiel 1

720 g Antimontrichlorid wurden in 64 kg Dimethylformamid 30 Minuten bei Raumtemperatur unter Rühren in einem Kessel gelöst. Dann wurden 36 kg eines Acrylnitrilcopolymerisates aus 59 Gew.-% Acrylnitril, 37,5 Gew.-% Vinylidenchlorid unter 3,5 Gew.-% Natriummethallylsulfonat unter Rühren bei Raumtemperatur zudosiert. Anschließend wurde das Gemisch durch 2stündiges Erwärmen auf 70° C in eine Spinnlösung übergeführt, filtriert und aus einer 240 Lochdüse trocken versponnen. Spinnstörungen traten nicht auf. Die gebündelte Fadenschar wurde am Schachtausgang mit ammoniakhaltigem Wasser über eine Präparationsrolle benetzt und anschließend auf Spulenkörper aufgewickelt. Das Spinngut vom Gesamttiter 2160 dtex, welches einen Antimontrioxidgehalt von 2,55 Gew.-%, bezogen auf Polymerfeststoff, aufweist, wurde auf Spulen gesammelt und zu einem Kabel vom Gesamttiter 151 200 dtex gefacht. Das Kabel wurde anschließend in Wasser von 80° C gewaschen, in kochendem Wasser 1 : 4fach versteckt, mit antistatischer Präparation versehen, getrocknet, gekräuselt und zu Stapelfasern von 60 mm Länge geschnitten. Die Fasern, die einen Endtiter von 3,3 dtex aufwiesen, besaßen im Vliesgewebe einen LOI-Wert von 29,5 und waren vollkommen selbstverlöschend. Der analytisch bestimmte Antimongehalt der Fasern betrug 0,95% (berechnet = 1,06 Gew.-%), die Faserfestigkeit 2,4 cN/dtex und die Faserdehnung 40%.

Elektromikroskopische Abbildungen der in den Fasern gebildeten Antimontrioxidpartikel ergeben Teilchengrößen unterhalb 50 nm, vorzugsweise in der Spannweite zwischen 6 und 20 nm mit der häufigsten Teilchengröße von etwa 10 nm.

In der folgenden Tabelle werden anhand weiterer Beispiele der Einfluß des Antimonoxidgehaltes auf die Höhe des LOI-Wertes und damit die Steigerung der Schwerentflammbarkeitseigenschaften, aufgezeigt. In allen Fällen wurde wieder ein Acrylnitrilcopolymerisat mit der chemischen Zusammensetzung von Beispiel 1 verwendet, in eine Spinnlösung, wie dort beschrieben, überführt und aus einer 240 Lochdüse trocken versponnen. Variiert wird der prozentuale Anteil an Antimonchlorid in der Spinnlösung. Die Hydrolyse- und Nachbehandlungsbedingungen entsprechen den Angaben aus Beispiel 1. Die LOI-Werte werden wiederum an Vliesgeweben mit einem durchschnittlichen Flächengewicht von ca. 200 g/m² bestimmt, der Antimongehalt der Fasern analytisch ermittelt und die Teilchengröße des sich bildenden Antimontrioxides anhand elektronenmikroskopischer Aufnahmen erfaßt. In

3

allen Fällen wurde für die Fasern die in Beispiel 1 beschriebene Teilchengrößenverteilung gefunden.

Tabelle

| Nr. | SbCl$_3$-Gehalt [Gew.-%, bezogen auf PAN in Spinnlösung] | Sb$_2$O$_3$-Gehalt [Gew.-%, bezogen auf PAN im Spinngut] | Sb-Gehalt [Gew.-%, bezogen auf PAN] berechnet | gefunden | LOI-Wert (% O$_2$) |
|---|---|---|---|---|---|
| 1 | ohne | ohne | 0 | 0,002 | 26 |
| 2 | 0,5 | 0,64 | 0,26 | 0,23 | 26,5 |
| 3 | 1,0 | 1,28 | 0,53 | 0,48 | 27 |
| 4 | 3,0 | 3,83 | 1,59 | 1,54 | 34,4 |
| 5 | 5,0 | 6,40 | 2,64 | 2,57 | 36,8 |

Beispiel 2
(Vergleich)

720 g Antimontrioxid wurden in 64 kg Dimethylformamid suspendiert und 30 Minuten bei Raumtemperatur gerührt. Dann wurden 36 kg eines Acrylnitrilcopolymerisates mit der chemischen Zusammensetzung aus Beispiel 1 unter Rühren zudosiert und durch 2stündiges Erwärmen auf 70°C in eine Spinnlösung überführt, filtriert und wie in Beispiel 1 beschrieben, zu Fäden vom Gesamttiter 2160 dtex trocken versponnen. Nach anfänglich gutem Lauf setzen sich nach ca. 10 Minuten die Düsenlöcher rundum zu und es kam zu Fadenabrissen im Spinnschacht. Trotz zahlreicher Manipulationen ließ sich die Fadenschar infolge ständiger Spinnstörungen nicht auf Spulen unterhalb des Spinnschachtes anlegen und sammeln. Der Versuch mußte abgebrochen werden. Anhand lichtmikroskopischer Aufnahmen betrug die Teilchengröße des verwendeten, marktüblichen Antimontrioxides durchschnittlich 2 bis 7 µm. Nach elektromikroskopischen Abbildungen lag die Teilchengröße in der Spannweite zwischen 0,6 und 7 µm. Häufigster Teilchendurchmesser war 4,5 µm.

**Patentansprüche**

1. Verfahren zur Herstellung Antimonoxid enthaltender, halogenhaltiger Formkörper aus Polymeren, dadurch gekennzeichnet, daß man der Lösung eines Polymers in einem organischen Lösungsmittel ein Antimonhalogenid zusetzt, aus der Polmerlösung Polymerformkörper erzeugt und in diesen vor oder während der Nachbehandlung das Antimonhalogenid zu Antimonoxid umsetzt.

2. Verfahren nach Anspruch 1, dadurch gekennzeichnet, daß man ein zu Antimontrioxid hydrolysierbares Antimonhalogenid zusetzt und die Formkörper vor oder während der Nachbehandlung mit Wasser in Berührung bringt.

3. Verfahren nach Anspruch 1 zur Herstellung Antimontrioxid enthaltender, halogenhaltiger Polyacrylnitrilfäden, dadurch gekennzeichnet, daß man der Lösung eines halogenhaltigen Acrylnitrilpolymerisates in einem organischen Lösungsmittel ein Antimonhalogenid zusetzt, die Lösung zu Fäden verspinnt und diese vor oder während der Nachbehandlung mit Wasser in Berührung bringt.

4. Verfahren nach Anspruch 1, dadurch gekennzeichnet, daß man das Antimonhalogenid in einer Menge von 1 bis 10 Gew.-%, bezogen auf Polymerfeststoff, der Polymerlösung zusetzt.

5. Verfahren nach Anspruch 1, dadurch gekennzeichnet, daß man das Antimonhalogenid in einer Menge von 2 bis 5 Gew.-%, bezogen auf Polymerfeststoff, der Polymerlösung zusetzt.

6. Verfahren nach Anspruch 1, dadurch gekennzeichnet, daß man das Antimonhalogenid in Form einer Lösung in einem organischen Lösungsmittel zusetzt.

7. Verfahren nach Anspruch 1, dadurch gekennzeichnet, daß dem zur Nachbehandlung verwendeten Wasser alkalisch wirkende Substanzen zugesetzt werden.

8. Verfahren nach Anspruch 1, dadurch gekennzeichnet, daß als Polymerlösungsmittel Dimethylformamid verwendet wird.

9. Verfahren nach Anspruch 2, dadurch gekennzeichnet, daß ein Acrylnitrilpolymer mit mindestens 40 Gew.-% an Acrylnitril-Einheiten und mindestens 15 Gew.-% an Vinylidenchlorid-Einheiten verwendet wird.

**0 076 971**

## Claims

1. Process for the production of moulded halogen-containing polymer products which contain antimony oxide, characterised in that an antimony halide is added to the solution of a polymer in an organic solvent, moulded polymer products are produced from the polymer solution and the antimony halide is converted into antimony oxide in these products before or during the after-treatment.

2. Process according to Claim 1, characterised in that an antimony halide which can be hydrolysed to form antimony trioxide is added and the moulded products are brought into contact with water before or during the after-treatment.

3. Process according to Claim 1 for the production of halogencontaining polyacrylonitrile filaments which contain antimony trioxide, characterised in that an antimony halide is added to the solution of a halogen-containing acrylonitrile polymer in an organic solvent, the solution is spun to form filaments and these filaments are brought into contact with water before or during the after-treatment.

4. Process according to Claim 1, characterised in that the antimony halide is added to the polymer solution in a quantity of 1 to 10% by weight, based on the polymer solids.

5. Process according to Claim 1, characterised in that the antimony halide is added to the polymer solution in a quantity of 2 to 5% by weight, based on the polymer solids.

6. Process according to Claim 1, characterised in that the antimony halide is added in the form of a solution in an organic solvent.

7. Process according to Claim 1, characterised in that alkaline-reacting substances are added to the water used for the aftertreatment.

8. Process according to Claim 1, characterised in that dimethyl formamide is used as the polymer solvent.

9. Process according to Claim 1, characterised in that an acrylonitrile polymer containing at least 40% by weight of acrylonitrile units and at least 15% by weight of vinylidene chloride units is used.


## Revendications

1. Procédé de production de pièces moulées en polymères renfermant un halogène, contenant de l'oxyde d'antimoine, caractérisé en ce qu'on ajoute un halogénure d'antimoine à la solution d'un polymère dans un solvant organique, on produit des pièces moulées en polymère à partir de la solution de ce dernier et on transforme dans ces pièces, avant ou pendant le traitement ultérieur, l'halogénure d'antimoine en oxyde d'antimoine.

2. Procédé suivant la revendication 1, caractérisé en ce qu'on ajoute un halogénure d'antimoine hydrolysable en trioxyde d'antimoine et on fait entrer les pièces moulées en contact avec de l'eau avant ou pendant le traitement ultérieur.

3. Procédé suivant la revendication 1 pour la production de fils de polyacrylonitrile contenant un halogène, renfermant du trioxyde d'antimoine, caractérisé en ce qu'on ajoute un halogénure d'antimoine à la solution d'un polymère d'acrylonitrile halogéné dans un solvant organique, on file la solution en filaments et on fait entrer ces derniers en contact avec de l'eau avant ou pendant le traitement ultérieur.

4. Procédé suivant la revendication 1, caractérisé en ce qu'on ajoute l'halogénure d'antimoine à la solution de polymère en une quantité de 1 à 10% en poids par rapport au polymère sur base solide.

5. Procédé suivant la revendication 1, caractérisé en ce qu'on ajoute l'halogénure d'antimoine à la solution de polymère en une quantité de 2 à 5% en poids par rapport au polymère sur base solide.

6. Procédé suivant la revendication 1, caractérisé en ce qu'on ajoute l'halogénure d'antimoine sous la forme d'une solution dans un solvant organique.

7. Procédé suivant la revendication 1, caractérisé en ce qu'on ajoute des substances à action alcaline à l'eau utilisée pour le traitement ultérieur.

8. Procédé suivant la revendication 1, caractérisé en ce qu'on utilise le diméthylformamide comme solvant pour le polymère.

9. Procédé suivant la revendication 2, caractérisé en ce qu'on utilise un polymère d'acrylonitrile comportant au moins 40% en poids de motifs acrylonitrile et au moins 15% en poids de motifs chlorure de vinylidène.